# EUROPEAN PATENT APPLICATION

(11) **EP 4 220 971 A1**
(43) Date of publication of application: **02.08.2023**
(21) Application number: 21870964.0
(22) Date of filing: 14.07.2021
(51) Int. Cl.: H04B 1/18, H04B 7/02

(54) **RADIO FREQUENCY DRX DEVICE, RADIO FREQUENCY SYSTEM, AND COMMUNICATION APPARATUS**

(30) Priority: 27.09.2020 CN 202011032912
(71) Applicant: GUANGDONG OPPO MOBILE TELECOMMUNICATIONS CORP., LTD., Dongguan, Guangdong 523860 (CN)
(72) Inventor: FENG, Bin, Dongguan, Guangdong 523860 (CN)
(74) Representative: Taor, Simon Edward William
(86) International application number: PCT/CN2021/106239
(87) International publication number: WO 2022/062586

(57) **Abstract**

Provided is a radio-frequency DRX device. The radio-frequency DRX device has a plurality of receiving ports (RX OUT) configured to be connected to a low noise amplifier module and an antenna port (ANT) configured to be connected to an antenna. The radio-frequency DRX device includes: a first switching unit (110) having a first terminal connected to the antenna port (ANT) and a plurality of second terminals; a filtering module (120) having a plurality of input terminals connected to the plurality of second terminals of the first switching unit in one-to-one correspondence and a plurality of output terminals connected to the plurality of receiving ports (RX OUT) in one-to-one correspondence. The filtering module (120) is configured to perform filtering processing on radio-frequency signals in at least three frequency bands. The first switching unit (110) is configured to selectively switch on a receiving path between the antenna port (ANT) and any one of the plurality of receiving ports (RX OUT).

## Description

### CROSS-REFERENCE TO RELATED APPLICATIONS

This application claims priorities to Chinese Patent Applications No. 2020110329129, entitled "RADIO-FREQUENCY DRX DEVICE, RADIO-FREQUENCY SYSTEM, AND COMMUNICATION APPARATUS", filed with China National Intellectual Property Administration on September 27, 2020, the entire disclosure of which is incorporated herein by reference.

### FIELD

The present disclosure relates to the field of radio-frequency technologies, and more particularly, to a radio-frequency DRX (Diversity Receive) device, a radio-frequency system, and a communication apparatus.

### BACKGROUND

The statements herein provide only background information relevant to the present disclosure and do not necessarily constitute exemplary related art.

With the development and advancement of technology, 5th Generation mobile communication technology (5G) has been increasingly applied to electronic devices. 5G mobile communication technology has a higher communication frequency than 4th Generation (4G) mobile communication technology. Generally, a diversity receiving module of a radio-frequency system includes a plurality of discrete receiving paths to support switching and receiving of a plurality of radio-frequency signals in different frequency bands, thereby leading to higher cost and occupying a relatively large area of a substrate.

### SUMMARY

Embodiments of the present disclosure provide a radio-frequency DRX device, a radio-frequency system, and a communication apparatus.

A radio-frequency DRX device has a plurality of receiving ports configured to be connected to a low noise amplifier module and an antenna port configured to be connected to an antenna. The radio-frequency DRX device includes a first switching unit and a filtering module. The first switching unit includes a first terminal connected to the antenna port and a plurality of second terminals. The first switching unit is configured to selectively switch on a receiving path between the antenna port and any one of the plurality of receiving ports. The filtering module has a plurality of input terminals connected to the plurality of second terminals of the first switching unit in one-to-one correspondence, and a plurality of output terminals connected to the plurality of receiving ports in one-to-one correspondence. The filtering module is configured to perform filtering processing on radio-frequency signals in at least three frequency bands.

A radio-frequency system includes an antenna assembly, a transceiving module, a diversity receiving module, the above-mentioned radio-frequency DRX device, and a switching module. The antenna assembly includes a first antenna, a second antenna, a third antenna, a fourth antenna, and a fifth antenna. The first antenna is configured to transceive a first radio-frequency signal. The second antenna and the third antenna are configured to transceive the first radio-frequency signal and a second radio-frequency signal. The fourth antenna and the fifth antenna are configured to transceive the second radio-frequency signal. The transceiving module is configured to support transceiving of the first radio-frequency signal and the second radio-frequency signal. The diversity receiving module is configured to support diversity receiving of the first radio-frequency signal and the second radio-frequency signal. The radio-frequency DRX device is configured to support the diversity receiving of the first radio-frequency signal and the second radio-frequency signal. The switching module is connected to the first antenna, the second antenna, the third antenna, the fourth antenna, the fifth antenna, the transceiving module, the diversity receiving module, and the radio-frequency DRX device. When the radio-frequency system is in a Non-Standalone Access (NSA) mode, at least two of the first antenna, the second antenna, and the third antenna are in an operating state to be capable of transceiving the first radio-frequency signal, and any one of the second antenna, the third antenna, the fourth antenna, and the fifth antenna is capable of transmitting the second radio-frequency signal to support a 1T4R Sounding Reference Signal (SRS) function.

A radio-frequency system includes an antenna assembly, a transceiving module, a diversity receiving module, the above-mentioned radio-frequency DRX device, and a switching module. The antenna assembly includes a first antenna, a second antenna, a third antenna, and a fourth antenna. The first antenna and the second antenna are each configured to transceive a first radio-frequency signal and a second radio-frequency signal. The third antenna and the fourth antenna are each configured to transceive the second radio-frequency signal. The transceiving module is configured to support transceiving of the first radio-frequency signal and the second radio-frequency signal. The diversity receiving module is configured to support diversity receiving of the first radio-frequency signal and the second radio-frequency signal. The above-mentioned radio-frequency DRX device is configured to support the diversity receiving of the first radio-frequency signal and the second radio-frequency signal. The switching module is connected to the first antenna, the second antenna, the third antenna, the fourth antenna, the transceiving module, the diversity receiving module, the antenna port of the radio-frequency DRX device, and the polling transmitting port of the radio-frequency DRX device. When the radio-frequency system is in a NSA mode, one of the first antenna and the second antenna is used for primary receiving of the first radio-frequency signal, the other one of the first antenna and the second antenna is used for the diversity receiving of the first radio-frequency signal, and any one of the first antenna, the second antenna, the third antenna, and the fourth antenna is capable of transmitting the second radio-frequency signal to support a 1T4R SRS function.

A communication apparatus includes a radio-frequency transceiver, a low noise amplifier module, and the radio-frequency system or the radio-frequency system as described above. The radio-frequency system is connected to the radio-frequency transceiver.

For the radio-frequency DRX device, the radio-frequency system, and the communication apparatus, the first switching unit and the filtering module in the radio-frequency DRX device are integrated and packaged in the same chip, thereby saving a substrate area occupied by the respective components. Thus, more physical space can be saved for performance optimization of other modules, and the costs can be reduced. In addition, by means of the first switching unit, the transceiving control of a plurality of radio-frequency signals in different frequency bands can be achieved, while reducing additional power supply layouts and logic control wirings, which is conducive to signal integrity on the substrate. In this way, mutual interference between signals can be reduced, and the difficulty in layout and wiring of the substrate can also be lowered.

One or more of the embodiments of the present disclosure are described in detail below in combination with the accompanying drawings. Other features, objects and advantages of the present disclosure will become apparent from the specification, the accompanying drawings, and the claims as attached.

### BRIEF DESCRIPTION OF THE DRAWINGS

In order to clearly explain technical solutions according to the embodiments of the present disclosure or in the related art, drawings used in the description of the embodiments or the related art are briefly described below. Obviously, the drawings described below are merely some embodiments of the present disclosure. Based on these drawings, other drawings can be obtained by those skilled in the art without creative effort.
FIG. 1 is a first schematic structural diagram of a radio-frequency DRX device according to an embodiment.
FIG. 2 is a second schematic structural diagram of a radio-frequency DRX device according to an embodiment.
FIG. 3a is a schematic diagram of packaging pins of the radio-frequency DRX device in FIG. 2.
FIG. 3b is a schematic diagram of a package structure of the radio-frequency DRX device in FIG. 2.
FIG. 4 is a third schematic structural diagram of a radio-frequency DRX device according to an embodiment.
FIG. 5 is a fourth schematic structural diagram of a radio-frequency DRX device according to an embodiment.
FIG. 6a is a schematic diagram of packaging pins of the radio-frequency DRX device in FIG. 5.
FIG. 6b is a schematic diagram of a package structure of the radio-frequency DRX device in FIG. 5.
FIG. 7a is a schematic structural diagram of an NSA mode according to an embodiment.
FIG. 7b is a schematic structural diagram of a Standalone Access (SA) mode according to an embodiment.
FIG. 8a is a first schematic diagram of an application scenario for a feedback channel information transmission of a communication apparatus according to an embodiment.
FIG. 8b is a second schematic diagram of an application scenario for a feedback channel information transmission of a communication apparatus according to an embodiment.
FIG. 9 is a schematic structural diagram of a mode of a Sounding Reference Signal (SRS) antenna polling transmission according to an embodiment.
FIG. 10 is a first schematic structural diagram of a radio-frequency system according to an embodiment.
FIG. 11 is a schematic structural diagram of a diversity receiving module according to an embodiment.
FIG. 12 is a second schematic structural diagram of a radio-frequency system according to an embodiment.
FIG. 13 is a third schematic structural diagram of a radio-frequency system according to an embodiment.
FIG. 14 is a schematic structural diagram of a first radio-frequency Power Amplifier Modules including Duplexers (PA Mid) device according to an embodiment.
FIG. 15 is a schematic structural diagram of a second radio-frequency PA Mid device according to an embodiment.
FIG. 16 is a fourth schematic structural diagram of a radio-frequency system according to an embodiment.
FIG. 17 is a schematic structural diagram of a communication apparatus according to an embodiment.

### DETAILED DESCRIPTION

In order to facilitate understanding of the present disclosure and to clarify the above-mentioned objects, features, and advantages of the present disclosure, specific embodiments of the present disclosure are described in detail below in conjunction with the accompanying drawings. In the following description, many specific details are provided to facilitate full understanding of the present disclosure. Preferred embodiments of the present disclosure are illustrated by means of the accompanying drawings. However, the present disclosure can be implemented in various forms and is not limited to the embodiments described herein. On the contrary, these embodiments are merely provided to facilitate thorough and comprehensive understanding of the content of the present disclosure. The present disclosure can be implemented in various manners other than those described herein, and similar improvements can be made by those skilled in the art without contradicting the intent of the present disclosure. Therefore, the present disclosure is not limited by specific embodiments disclosed below.

In addition, the term "first" or "second" is only for descriptive purposes, rather than indicating or implying relative importance or implicitly indicating the number of indicated technical features. Therefore, the features associated with "first" or "second" can explicitly or implicitly include at least one of the features. In the description of the present disclosure, "plurality of" means at least two, unless otherwise specifically indicated. In the present disclosure, "a number of" means at least one, unless otherwise specifically indicated.

A radio-frequency DRX device and a radio-frequency system provided by the embodiments of the present disclosure can be applied to a communication apparatus having a wireless communication function. The communication apparatus may be a handheld device, a vehicle-mounted device, a wearable device, a computing device or other processing devices connected to a wireless modem, various forms of User Equipment (UE) (e.g., mobile phones), Mobile Stations (MS), etc. For ease of description, the above-mentioned devices are all referred to as the communication apparatus. A network device may include a base station, an access point, etc.

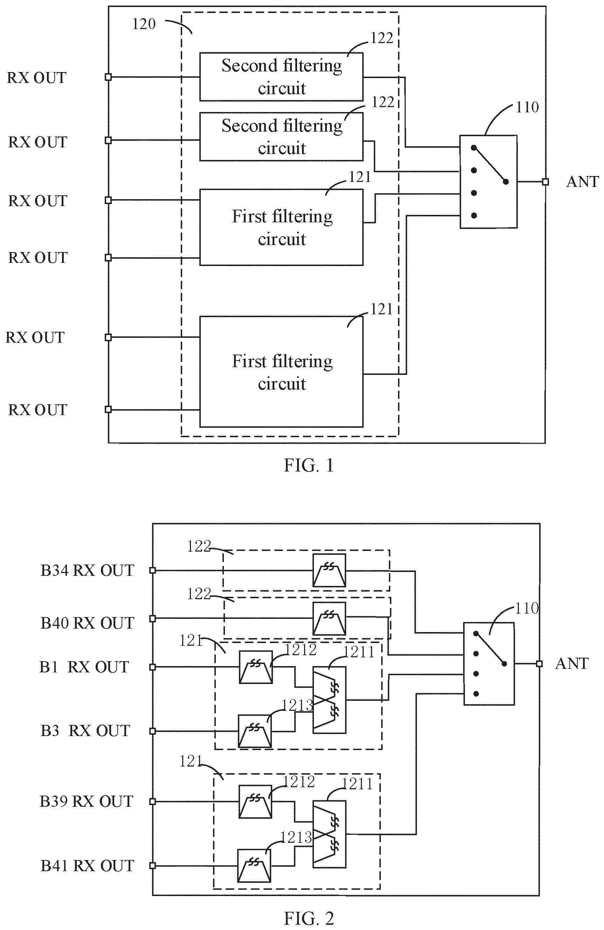

According to an embodiment of the present disclosure, a radio-frequency DRX device is provided. As illustrated in FIG. 1, in an embodiment, a radio-frequency DRX device has a plurality of receiving ports **RX OUT** configured to be connected to a low noise amplifier module, and an antenna port **ANT** configured to be connected to an antenna. The radio-frequency DRX device can be a diversity receive (DRX) module.

In an embodiment, the radio-frequency DRX device is a multi-band DRX device. The multi-band DRX device can implement diversity receiving and primary receiving of a plurality of radio-frequency signals in different frequency bands can be achieved, and can also implement receiving and switching of the plurality of radio-frequency signals in the different radio frequencies.

In an embodiment, the radio-frequency DRX device can be a package chip. In such a device, the plurality of receiving ports **RX OUT** and the antenna port **ANT** can be radio-frequency pin terminals of the radio-frequency DRX device for connecting to various external devices. Specifically, the receiving port **RX OUT** may be configured to be connected to a low noise amplifier module, and the antenna port **ANT** may be configured to be connected to the antenna. For example, the antenna port **ANT** may input a radio-frequency signal received by the antenna to the radio-frequency DRX device, and the receiving port **RX OUT** may process the radio-frequency signal received by the radio-frequency DRX device via the antenna port **ANT** and output the processed radio-frequency signal to the low noise amplifier module, thereby realizing a receiving control of the radio-frequency signal.

The radio-frequency DRX device includes a first switching unit 110 and a filtering module 120. The first switching unit 110 includes a first terminal and a plurality of second terminals. The first terminal of the first switching unit 110 is connected to the antenna port **ANT.** Each second terminal of the first switching unit 110 is connected to at least one of receiving ports **RX OUT.** That is, the filtering module 120 has a plurality of input terminals connected to the plurality of second terminals of the first switching unit 110 in one-to-one correspondence, and a plurality of output terminals connected to the plurality of receiving ports **RX OUT** in one-to-one correspondence. The filtering module 120 may perform filtering processing on radio-frequency signals in at least three frequency bands.

The radio-frequency signals in the at least three frequency bands include at least a 5G signal in a predetermined frequency band and Long-Term Evolution (LTE) signals in at least two medium-high frequency bands. Specifically, as illustrated in Table 1, the radio-frequency signals in the at least three frequency bands may constitute an ENDC combination mode.

**[Table 1] ENDC combination mode**

| 5G frequency band | ENDC combination mode |
|---|---|
| N41 | B3+N41B39+N41 |
| N78 | B3+N78/B5+N78 |
| N79 | B3+N79 |

The first switching unit 110 is configured to selectively switch on a receiving path between the antenna port **ANT** and any receiving port **RX OUT.** That is, a first switching module 50 may selectively switch on a path between the first terminal and any second terminal based on a corresponding control signal, to switch on the receiving path between the antenna port **ANT** and any receiving port **RX OUT,** thereby receiving of the plurality of radio-frequency signals in the different frequency bands.

According to the embodiments of the present disclosure, the first switching unit 110 and the filtering module 120 may be integrated in the radio-frequency DRX device, and the radio-frequency DRX device is provided with the antenna port **ANT** and the plurality of receiving ports **RX OUT,** such that the radio-frequency DRX device can implement the receiving of the plurality of radio-frequency signals in the different frequency bands, save a substrate area occupied by the respective components. Thus, more physical space can be saved for performance optimization of other modules, and the costs can be reduced. Meanwhile, by integrating the first switching unit 110 in the radio-frequency DRX device, additional power supply layouts and logic control wirings can be reduced, which is more conducive to signal integrity on the substrate. In this way, mutual interference between signals can be reduced, and the difficulty in the layout and wirings of the substrate can also be lowered.

In an embodiment, the filtering module 120 includes at least one first filtering circuit 121 and at least one second filtering circuit 122. The first filtering circuit 121 is configured to perform filtering processing on a plurality of radio-frequency signals in different frequency bands. That is, the first filtering circuit 121 may be configured to perform filtering processing on two radio-frequency signals at least having different frequency bands. The second filtering circuit 122 is configured to perform filtering processing on a radio-frequency signal in a single frequency band. Frequency bands of radio-frequency signals correspondingly processed by the first filtering circuit and the second filtering circuit are different. That is, the first filtering circuit 121 and the second filtering circuit 122 perform the filtering processing on the radio-frequency signals in different frequency bands, or the first filtering circuit 121 and the second filtering circuit 122 output the filtering processed radio-frequency signals in different frequency bands.

Specifically, the number of the first filtering circuit 121 and the number of the second filtering circuit 122 can be determined based on the number of receiving signals required to be processed by the radio-frequency system (the received radio-frequency signals).

As illustrated in FIG. 2, in an embodiment, the first filtering circuit 121 includes a first combiner 1211, a first filter 1212, and a second filter 1213. The first combiner 1211 and an input terminal of the first combiner 1211 are connected to one second terminal of the first switching unit 110. The first filter 1212 is connected to a first output terminal of the first combiner 1211 and one of the plurality of receiving ports **RX OUT,** respectively. The second filter 1213 is connected to a second output terminal of the first combiner 1211 and another one of the plurality of receiving ports **RX OUT,** respectively. The first filter 1212 and the second filter 1213 are configured to perform filtering processing on the plurality of radio-frequency signals in the different frequency bands.

Specifically, when the radio-frequency DRX device receives the plurality of radio-frequency signals in the different frequency bands through the antenna port **ANT,** the first switching unit 110 may switch the received radio-frequency signals to the first filtering circuit 121, and the first combiner 1211 in the first filtering circuit 121 may perform shunt processing on the plurality of received radio-frequency signals in different frequency bands to separate radio-frequency signals each in a single frequency band. For example, a first input terminal of the first combiner 1211 may output a radio-frequency signal having a first frequency band, and a second input terminal of the first combiner 1211 may output a radio-frequency signal having a second frequency band. The first filter 1212 may perform filtering processing on the radio-frequency signal having the first frequency band. The second filter 1213 may perform filtering processing on the radio-frequency signal having the second frequency band. That is, the first filtering circuit 121 in the embodiments of the present disclosure may perform the filtering processing on the radio-frequency signals in dual frequency bands.

In an embodiment, two first filtering circuits 121 are provided. In one first filtering circuit 121, one first filter 1212 may be configured to perform filtering processing on a radio-frequency signal in a B1 frequency band, and another first filter 1212 may be configured to perform filtering processing on a radio-frequency signal in a B3 frequency band. In the other first filtering circuit 121, one first filter 1212 may be configured to perform filtering processing on a radio-frequency signal in a B39 frequency band, and another first filter 1212 may be configured to perform filtering processing on a radio-frequency signal in a B41 frequency band.

Specifically, the first filter 1212 and the second filter 1213 may be a band-pass filter or a low-pass filter, which is configured to filter spurious waves and only transmit a radio-frequency signal in a predetermined frequency band. For example, the first filter 1212 only allows the radio-frequency signal in the B1 or B39 frequency band to transmit, and the first filter 1212 only allow the radio-frequency signal in the B3 or B41 frequency band to transmit. The B41 frequency band and the N41 frequency band both range from 2496 MHz to 2690 MHz.

In an embodiment, the second filtering circuit 122 may be configured to perform filtering processing on the radio-frequency signal in the single frequency band. That is, the second filtering circuit 122 may include a filter configured to filter the spurious waves, which allows the radio-frequency signal in the predetermined frequency band to transmit. For example, two second filtering circuits 122 are provided. The two second filtering circuits 122 are configured to perform filtering processing on a radio-frequency signal in a B34 frequency band and a radio-frequency signal in a B40 frequency band, respectively. That is, one filtering circuit 122 is configured to perform the filtering processing on the radio-frequency signal in the B34 frequency band, and the other second filtering circuit 122 is configured to perform the filtering processing on the radio-frequency signal in the B40 frequency band.

In an embodiment, a type of the first switching unit 110 can be selected based on the number of the first filtering circuits 121 and the number of the second filtering circuits 122. For example, when two first filtering circuits 121 and two second filtering circuits 122 are provided, the first switching unit 110 thereof is a radio-frequency Single-Pole Four-Throw (SP4T) switch. A first terminal (a single terminal) of the radio-frequency SP4T switch is connected to the antenna port **ANT,** and four second terminals of the radio-frequency SP4T switch are connected to the two first filtering circuits 121 and two second filtering circuits 122 in one-to-one correspondence.

Based on the radio-frequency DRX device as illustrated in FIG. 2, a receiving control of the radio-frequency signal in the B41 frequency band controlled by the radio-frequency DRX device and a working principle of the radio-frequency DRX device are described below.

The radio-frequency signal in the B41 frequency band enters a single port of the radio-frequency SP4T switch through the antenna port **ANT,** and then is switched to the first combiner 1211 of the first filtering circuit 121 through the radio-frequency SP4T switch. Then, the second filter (i.e., a B41 filter) performs filtering processing on the radio-frequency signal in the B41 frequency band, and the radio-frequency signal in the B41 frequency band is outputted to a receiving port **B41 RX OUT** and to the low noise amplifier module through the receiving port **B41 RX OUT.** In this way, a receiving control of the radio-frequency signal in the B41 frequency band can be implemented.

According to the embodiments of the present disclosure, two first filtering circuits 121, two second filtering circuits 122, and the first switching unit 110 are integrated in the radio-frequency DRX device, thereby implementing switching and receiving of the plurality of radio-frequency signals in the different frequency bands, for example, the switching and receiving of radio-frequency signals in six frequency bands including the B1, B3, B39, B41,B34, and B40 frequency bands. That is, the radio-frequency DRX device can perform the filtering processing on the radio-frequency signals in these six frequency bands including the B1, B3, B39, B41,B34, and B40 frequency bands, thereby achieving a MIMO function of the N41 frequency band in a 4G LTE signals and a 5G New Radio (NR) signals. In the radio-frequency DRX device, a separation device, which is required to be packaged independently, can be omitted. The radio-frequency DRX device in the embodiments of the present disclosure needs only one package, and thus at least save a total area of 20mm^2 can be saved. Thus, more physical space can be saved for performance optimization of other modules, and the costs can be reduced. Meanwhile, the first switching unit 110 is integrated in the radio-frequency DRX device, and thus the additional power supply layouts and logic control wirings can be omitted, which is more conducive to signal integrity on the substrate. In this way, mutual interference between signals can be reduced, and the difficulty in PCB layout and wirings can also be lowered.

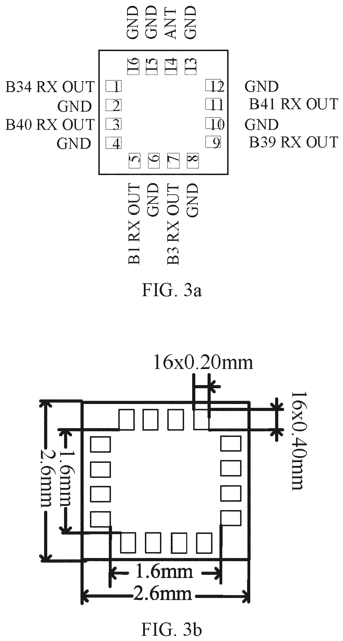

In an embodiment, as illustrated in FIG. 3a, the first switching unit 110 and the filtering module 120 included in the radio-frequency DRX device can be integrated in the same chip through a packaging process. As illustrated in FIG. 3b, the respective pins in the radio-frequency DRX device (a package chip) correspond to a plurality of ports provided in the radio-frequency DRX device in one-to-one correspondence, and they are integrated through packaging. In this way, an integration level of the radio-frequency L-DRX device 10 can be improved.

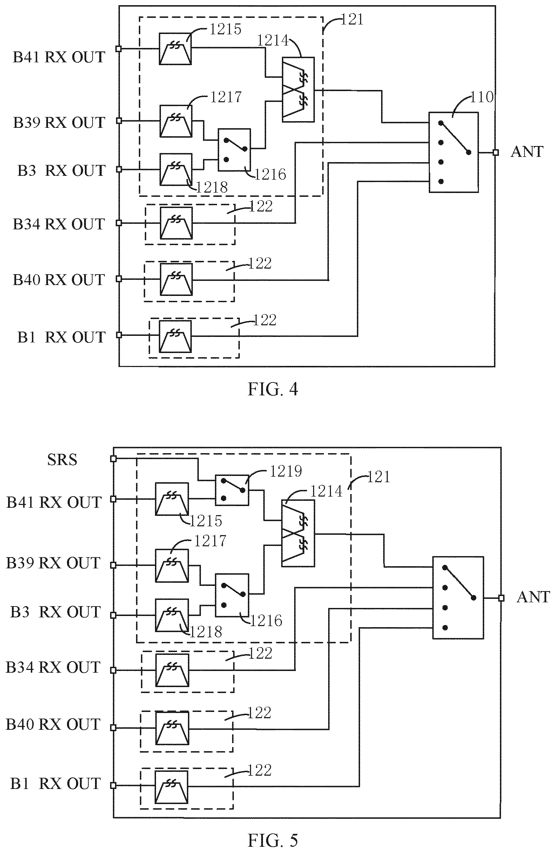

As illustrated in FIG. 4, in an embodiment, the first filtering circuit 121 includes a second combiner 1214, a third filter 1215, a second switching unit 1216, a fourth filter 1217, and a fifth filter 1218. An input terminal of the second combiner 1214 is connected to one second terminal of the first switching unit 110. The third filter 1215 is connected to a first output terminal of the second combiner 1214 and another receiving port **RX OUT,** respectively. A first terminal of the second switching unit 1216 is connected to a second output terminal of the second combiner 1214. The fourth filter 1217 is connected to one second terminal of the second switching unit 1216 and yet another receiving port **RX OUT.** The fifth filter 1218 is connected to another second terminal of the second switching unit 1216 and still yet another receiving port **RX OUT.** The third filter 1215, the fourth filter 1217, and the fifth filter 1218 perform the filtering processing on the plurality of radio-frequency signals in the different frequency bands, respectively.

In an embodiment, the third filter 1215, the fourth filter 1217, and the fifth filter 1218 are configured to filter the spurious waves, respectively, and allow the radio-frequency signal in the predetermined frequency band to transmit. The third filter 1215 is configured to perform filtering processing on the radio-frequency signal in the B41 frequency band. The fourth filter 1217 is configured to perform filtering processing on the radio-frequency signal in the B39 frequency band. The fifth filter 1218 is configured to perform filtering processing on the radio-frequency signal in the B3 frequency band. Specifically, the second switching unit 1216 may be a radio-frequency Single-Pole Double-Throw (SPDT) switch to implement switching and receiving of the radio-frequency signals in the two frequency bands, i.e., the B39 frequency band and the B3 frequency band.

In the embodiments of the present disclosure, by providing the second combiner 1214, three filters 1215, 1217, and 1218, and the second switching unit 1216 in the first filtering circuit 121, the first filtering circuit 121 can receive the radio-frequency signals in three frequency bands and perform the filtering processing on the received radio-frequency signals in three frequency bands.

In an embodiment, the second filtering circuit 122 in the radio-frequency DRX device can implement filtering processing on the radio-frequency signal in the single frequency band. Specifically, the second filtering circuit 122 may include a filter, and the filter can be configured to filter the spurious waves and allow the radio-frequency signal in the predetermined frequency band to transmit. Specifically, three second filtering circuits 122 are provided. The three second filtering circuits 122 are configured to perform filtering processing on the radio-frequency signal in the B1 frequency band, the radio-frequency signal in the B34 frequency band, and the radio-frequency signal in the B40 frequency band, respectively. That is, one second filtering circuit 122 is configured to perform filtering processing on the radio-frequency signal in the B1 frequency band, another second filtering circuit 122 is configured to perform filtering processing on the radio-frequency signal in the B34 frequency band, and yet another second filtering circuit 122 is configured to perform filtering processing on the radio-frequency signal in the B40 frequency band.

As illustrated in FIG. 5, in an embodiment, the radio-frequency DRX device further has a polling transmitting port **SRS** configured to be connected to a radio-frequency Power Amplifier Modules comprising Duplexers (PA Mid) device. The polling transmitting port **SRS** may be configured to receive radio-frequency signals transmitted by the radio-frequency PA Mid device. Through the polling transmitting port **SRS,** the received radio-frequency signal can be transmitted through the antenna port of the radio-frequency DRX device to support a transmitting control of the radio-frequency signal.

Specifically, the first filtering circuit 121 further includes a third switching unit 1219. The third switching unit 1219 is connected to the polling transmitting port **SRS,** the third filter 1215, and the second combiner 1214. The third switching unit 1219 is configured to selectively switch on a transmitting path between the polling transmitting port **SRS** and the antenna port **ANT** and a receiving path where the third filter 1215 is located. For example, the third switching unit 1219 may be a radio-frequency SPDT switch. The radio-frequency SPDT switch includes a control terminal and two selection terminals. One selection terminal of the radio-frequency SPDT switch is connected to the polling transmitting port **SRS,** and the other selection terminal of the radio-frequency SPDT switch is connected to the third filter 1215. The control terminal of the radio-frequency SPDT switch is connected to a first input terminal of the second combiner 1214. An output terminal of the combiner is connected to the antenna port **ANT** via the first switching unit 110.

By means of the radio-frequency DRX device as illustrated in FIG. 5, a receiving control of the radio-frequency signal in the B41 frequency band controlled by the radio-frequency DRX device and a working principle of the radio-frequency DRX device are described below.

Receiving control: the radio-frequency signal in the B41 frequency band enters the single port of the radio-frequency SP4T switch through the antenna port **ANT,** and then is switched to the second combiner 1214 of the first filtering circuit 121 through the radio-frequency SP4T switch; the radio-frequency signal in the B41 frequency band is then switched to the third filter (i.e., the B41 filter) via the second selection terminal of the radio-frequency SPDT switch; after the third filter performs the filtering processing on the radio-frequency signal in the B41 frequency band, the radio-frequency signal in the B41 frequency band is outputted to the receiving port B41 **RX OUT** and to the low noise amplifier module through the receiving port B41 **RX OUT.** In this way, the receiving control of the radio-frequency signal in the B41 frequency band can be implemented.

Transmitting control: the radio-frequency signal in the B41 frequency band enters the radio-frequency SPDT switch through the polling transmitting port **SRS,** and then is switched on with the control terminal through the first selection terminal of the radio-frequency SPDT switch; then, the radio-frequency signal in the B41 frequency band is outputted to the second combiner 1214, and switched to the antenna port **ANT** via the radio-frequency SP4T switch. In this way, a transmitting control of the radio-frequency signal in the B41 frequency band can be implemented.

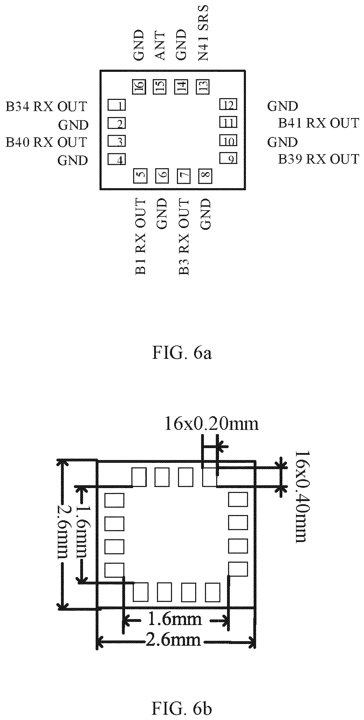

In an embodiment, one first filtering circuit 121, three second filtering circuits 122, and the first switching unit 110 included in the radio-frequency DRX device can be all integrated in the same chip through the packaging process, as illustrated in FIG. 6a. As illustrated in FIG. 6b, the respective pins in the radio-frequency DRX device correspond to the plurality of ports provided in the radio-frequency DRX device in one-to-one correspondence, and they are integrated through packaging. In this way, the integration level of the radio-frequency DRX device can be improved.

According to the embodiments of the present disclosure, by integrating one first filtering circuit 121, three second filtering circuits 122, and the first switching unit 110 in the radio-frequency DRX device, the switching and receiving of the plurality of radio-frequency signals in the different frequency bands as well as the transmitting control of the radio-frequency signals can be achieved. For example, the switching and receiving of the radio-frequency signals in six frequency bands, i.e., the B1, B3, B39, B41, B34, and B40 frequency bands, and the transmitting control of the single frequency band, i.e., the filtering processing on the radio-frequency signals in six frequency bands including the B1, B3, B39, B41, B34, and B40 frequency bands can be achieved. Therefore, the MIMO function of the N41 frequency band in the 4G LTE signals and the 5G NR signals can be achieved. In the radio-frequency DRX device, a separation device, which is required to be packaged independently, can be omitted. The radio-frequency DRX device in the embodiments of the present disclosure needs only one package, and thus at least save a total area of 20mm^2 can be saved. Thus, more physical space can be saved for performance optimization of other modules, and the costs can be reduced. Meanwhile, the first switching unit 110 is integrated in the radio-frequency DRX device, and thus the additional power supply layouts and logic control wirings can be omitted, which is more conducive to signal integrity on the substrate. In this way, mutual interference between signals can be reduced, and the difficulty in PCB layout and wirings can also be lowered.

The embodiments of the present disclosure further provide a radio-frequency system. The radio-frequency system may include the radio-frequency DRX devices described in any one of the above embodiments. The radio-frequency system according to the embodiments of the present disclosure may support 5th Generation mobile communication technology (5G or a 5G technology for short), which is a latest generation of cellular mobile communication technology and also an extension following a 4G system, a 3G system, and a 2G system. 5G performance targets include a high data rate, delay reduction, energy savings, costs reduction, and increasing system capacity, and large-scale device connection. 5G is divided into two modes for supporting Standalone Access (NA) and Non Standalone Access (NSA). The NSA is anchoring 5G control signaling on a 4G base station. The Standalone Access is directly accessing a 5G base station to a 5G core network, and the control signaling is independent of a 4G network.

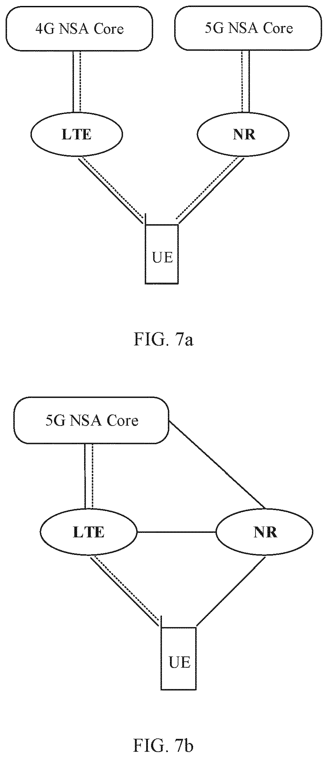

In the embodiments of the present disclosure, the NSA mode includes any one of EN-DC, NE-DC, and NGEN-DC frameworks. In the EN-DC framework, as illustrated in FIG. 7a, an electronic device UE is connected to a 4G NSA core network, a 4G base station is a master station, and a 5G base station is a secondary station. In the NE-DC framework, as illustrated in FIG. 7b, a 5G NSA core network is introduced, a 5G base station is a master station, and a 4G base station is a secondary station. In the NGEN-DC framework, the 5G core network is introduced, a 4G base station is a master station, and a 5G base station is a secondary station.

The 5G network supports beam-shaping technology, which allows directional transmission to communication apparatuses. In order to implement the directional transmission, a base station first is required to detect a position of the communication apparatus, a quality of a transmitting path, etc., to allocate resources of the base station to each communication apparatus more accurately.

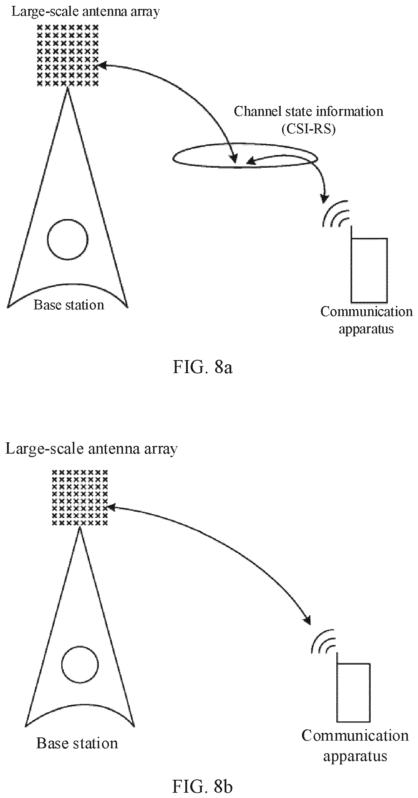

Currently, the communication apparatus provides feedback channel information in two different modes, i.e., Precoding Matrix Indicator (PMI) and Sounding Reference Signal (SRS), and signal transmissions of these two modes are as illustrated in FIG. 8a and FIG. 8b, respectively. In view of standard definition, PMI is a mandatory function for all 5G communication apparatuses, while SRS is an optional function. PMI is a mode that the base station estimates channel information and resource requirements in accordance with a predetermined mechanism based on a measurement of a terminal and various quantization algorithms, and reports the channel information and the resource requirements to the base station. SRS is a mode that the terminal directly reports the channel information to the base station by means of channel reciprocity. It is obvious that SRS is more accurate than PMI.

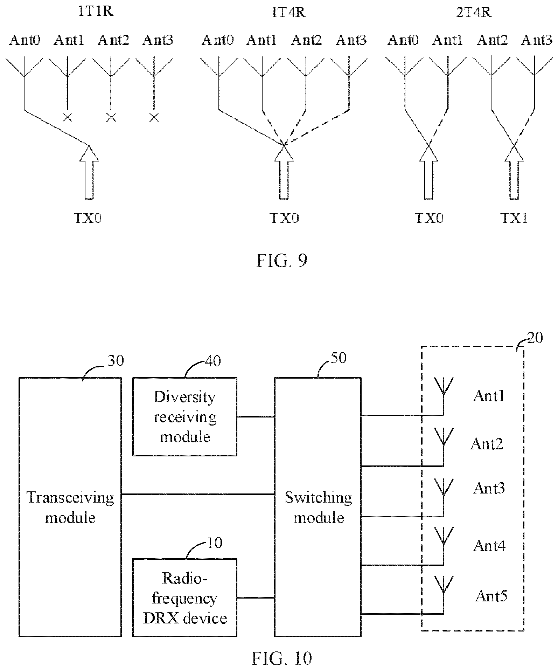

The base station can detect a position of the terminal and a channel quality by transmitting SRS information by means of the communication apparatus. SRS antenna polling transmission is as illustrated in FIG. 9 and explained in detail below.

1T1R: feeding back information to the base station only at the first antenna, not supporting the SRS polling transmission.

1T4R: transmitting SRS information at the first antenna to a fourth antenna in turn, where only one antenna is selected for transmission each time. Currently, Non-Standalone (NSA) networks adopt this mode.

2T4R: transmitting SRS information at the first antenna to the fourth antenna in turn, where two antennas are selected for transmission each time. Currently, Standalone (SA) networks adopt this mode.

In an SRS mode, with an increase in the number of antennas capable of participating in the transmission of a reference signal, the channel estimation is more accurate, and thus the corresponding rate can be higher. With the same number of antennas, the SA mode can complete the channel estimation faster than the NSA mode, thereby increasing a network channel estimation speed.

As illustrated in FIG. 10, in an embodiment, a radio-frequency system includes the radio-frequency DRX device 10 according to the above embodiments (as illustrated in FIG. 1, FIG. 2, and FIG. 4), an antenna assembly 20, a transceiving module 30, a diversity receiving module 40, and a switching module 50.

The antenna assembly 20 includes a first antenna **Ant1,** a second antenna **Ant2,** a third antenna **Ant3,** a fourth antenna **Ant4**, and a fifth antenna **Ant5**. The first antenna **Ant1** is configured to transceive a first radio-frequency signal. The second antenna **Ant2** and the third antenna **Ant3** are configured to transceive the first radio-frequency signal and a second radio-frequency signal. The fourth antenna **Ant4** and the fifth antenna **Ant5** are configured to transceive the second radio-frequency signal.

In an embodiment, the first radio-frequency signal is the LTE signal in the medium-high frequency band, and the first radio-frequency signal is the 5G signal. That is, the first antenna **Ant1** and the second antenna **Ant2** are both antennas capable of supporting the LTE signals different frequency bands. The third antenna **Ant3,** the fourth antenna **Ant4,** and the fifth antenna **Ant5** are antennas capable of supporting the 5G NR signal. The first antenna **Ant1** and the second antenna **Ant2** may be configured to receive and transmit (i.e., transceive) LTE signals in different frequency bands. Specifically, the first antenna **Ant1** and the second antenna **Ant2** may be configured to transceive the LTE signal in the medium-high frequency band. The third antenna **Ant3**, the fourth antenna **Ant4**, and the fifth antenna **Ant5** may be configured to transceive the 5G NR signals in different frequency bands, for example, the radio-frequency signal in an N41, N77, or N79 frequency band. For example, functions of the respective antennas in the antenna assembly 20 are illustrated in Table 2.

**[Table 2] Functions of respective antennas in the antenna assembly 20**

| Antenna | Function 1 | Function 2 | Function 3 |
|---|---|---|---|
| First antenna | MHB PRX | | |
| Second antenna | MHB DRX | NSA: N41 DRXMIMO | SA: N41 DRX MIMO |
| Third antenna | MHB DRX | NSA: N41 DRX | SA: N41 DRX |
| Fourth antenna | N41 PRX | | |
| Fifth antenna | N41 PRX MIMO | | |

In Table 2, MHB represents LTE signals in high frequency bands, for example, including the LTE signals in B1, B3, B34, B39, B7, B40, and B41 frequency bands; PRX represents primary receiving; and DRX represents diversity receiving.

In an embodiment, each antenna in the antenna assembly 20 may be a directional or non-directional antenna. For example, the respective antennas in the antenna assembly 20 may be of any suitable type of antenna. For example, the respective antennas in the antenna assembly 20 may include an antenna having a resonant element and formed by at least one of the following antenna structures: an array antenna structure, a loop antenna structure, a patch antenna structure, a slot antenna structure, a spiral antenna structure, a strip antenna, a monopole antenna, a dipole antenna, or the like. Different types of antennas can be used for combinations of frequency bands of different radio-frequency signals.

The transceiving module 30 is configured to support transceiving of the first radio-frequency signal and the second radio-frequency signal. For example, the transceiving module 30 may be configured to support an amplification and transceiving control of the first radio-frequency signal and the second radio-frequency signal. That is, the transceiving module 30 may implement a receiving and transmitting control of a plurality of radio-frequency signals. For example, the transceiving module 30 may include a plurality of Power Amplifier Modules including Duplexers (PA Mid) device, and the device has a receiving path and a transmitting path for receiving and transmitting the first radio-frequency signal and the second radio-frequency signal, to implement the transceiving control of the first radio-frequency signal and the second radio-frequency signal.

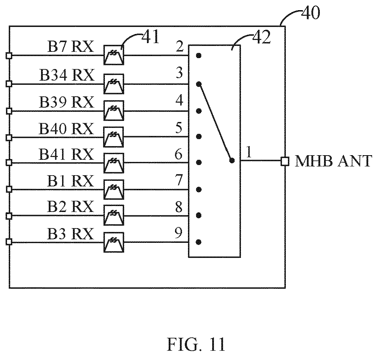

The diversity receiving module 40 is configured to support diversity receiving of the first radio-frequency signal and the second radio-frequency signal. As illustrated in FIG 11, the diversity receiving module 40 can include a plurality of filters 41 and a multi-channel selection switch 42. Each filter 41 may correspondingly perform filtering processing on the received radio-frequency signal, and output the filtered radio-frequency signal to a corresponding low noise amplification module to implement diversity receiving of each of the radio-frequency signals. The multi-channel selection switch 42 may be configured to selectively receive a radio-frequency signal in any frequency band. The frequency bands of the radio-frequency signals received by the respective diversity receiving circuits are different. For example, the diversity receiving module 40 may implement diversity receiving of radio-frequency signals in eight frequency bands including the B7, B34, B39, B40, B41, B1, B2, and B3 frequency bands.

The switching module 50 is connected to the first antenna **Ant1,** the second antenna **Ant2,** the third antenna **Ant3,** the fourth antenna **Ant4,** the fifth antenna **Ant5,** the transceiving module 30, a medium-high frequency antenna port **MHB ANT** of the diversity receiving module 40, and the radio-frequency DRX device, respectively. Specifically, the receiving channel and the transmitting path where the first antenna **Ant1,** the second antenna **Ant2,** the third antenna **Ant3,** the fourth antenna **Ant4,** and the fifth antenna **Ant5** are each located may be respectively controlled by controlling a switching state of the switching module 50.

When the radio-frequency system is in the NSA mode, at least two of the first antenna **Ant1,** the second antenna **Ant2,** and the third antenna **Ant3** are in an operating state to perform the transceiving of the first radio-frequency signal, and any one of the second antenna **Ant2,** the third antenna **Ant3,** the fourth antenna **Ant4,** and the fifth antenna **Ant5** can perform transmit the second radio-frequency signal to support a 1T4R Sounding Reference Signal (SRS) function.

For example, when the radio-frequency system is in the NSA mode, the first antenna **Ant1** transmits the first radio-frequency signal and performs primary receiving on the first radio-frequency signal; the second antenna **Ant2** or the third antenna **Ant3** may perform diversity receiving on the first radio-frequency signal; and meanwhile, the second antenna **Ant2,** the third antenna **Ant3,** the fourth antenna **Ant4,** and the fifth antenna **Ant5** can be configured to implement the transmitting of the second radio-frequency signal to support the 1T4R SRS function. That is, in a process that the second antenna **Ant2,** the third antenna **Ant3,** the fourth antenna **Ant4,** and the fifth antenna **Ant5** implement the transmitting of the second radio-frequency signal to support the 1T4R SRS function, when the second antenna **Ant2** transmits the second radio-frequency signal, the third antenna **Ant3** may perform diversity receiving on the first radio-frequency signal; or when the third antenna **Ant3** transmits the second radio-frequency signal, the second antenna **Ant2** may perform diversity receiving on the first radio-frequency signal. Based on the radio-frequency system, the first antenna **Ant1,** the second antenna **Ant2,** the third antenna **Ant3,** the fourth antenna **Ant4,** and the fifth antenna **Ant5** can also implement the first radio-frequency signal and the MIMO function of the first radio-frequency signal.

When the radio-frequency system is in the SA mode, any two of the second antenna **Ant2,** the third antenna **Ant3,** the fourth antenna **Ant4,** and the fifth antenna **Ant5** can implement the transmitting of the second radio-frequency signal to support a 2T4R SRS function. Meanwhile, based on the radio-frequency system, the first antenna **Ant1,** the second antenna **Ant2,** the third antenna **Ant3,** the fourth antenna **Ant4,** and the fifth antenna **Ant5** can also implement the first radio-frequency signal and the MIMO function of the first radio-frequency signal.

In the radio-frequency system according to the above embodiments, by providing the antenna assembly 20 including five antennas, the transceiving module 30, the diversity receiving module 40, the radio-frequency DRX device, and the switching module 50, the receiving channel and the transmitting path where the first antenna **Ant1,** the second antenna **Ant2,** the third antenna **Ant3,** the fourth antenna **Ant4,** and the fifth antenna **Ant5** are each located can be respectively controlled to be switched on by controlling the switching state of the switching module 50, enabling the radio-frequency system to support the 1T4R SRS function in the NSA mode and the 2T4R SRS function in the SA mode. Meanwhile, the radio-frequency system can also implement the first radio-frequency signal and the MIMO function of the first radio-frequency signal. In addition, in the radio-frequency system provided in the embodiments of the present disclosure, by means of the packaged radio-frequency DRX device, the filter can implement the receiving of the first radio-frequency signal and the second radio-frequency signal without providing a plurality of independent switches. In this way, the cost can be reduced and the substrate area occupied by the respective components in the radio-frequency system can also be reduced.

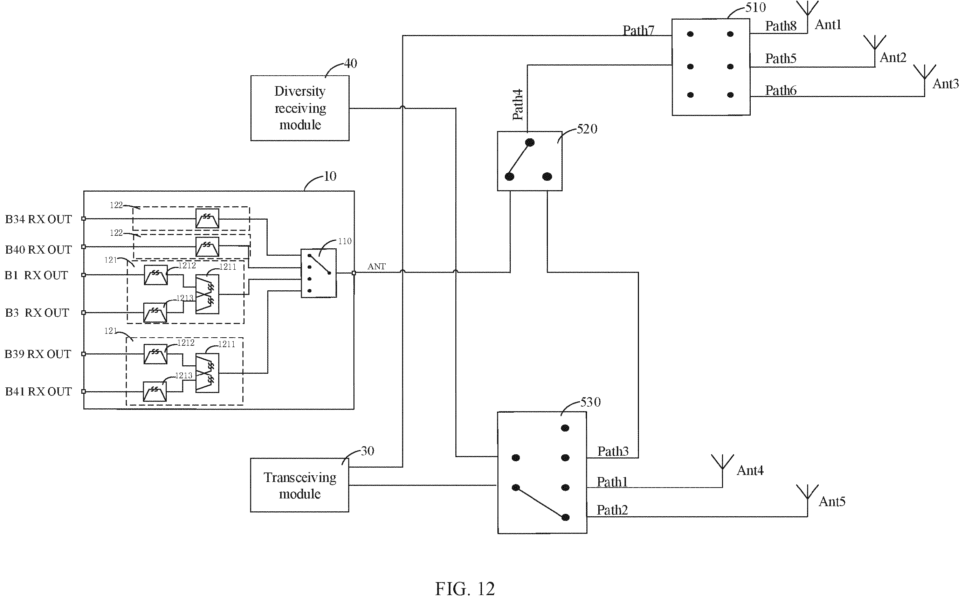

As illustrated in FIG. 12, in an embodiment, the switching module 50 includes a fourth switching unit 510, a fifth switching unit 520, and a sixth switching unit 530. One first terminal of the fourth switching unit 510 is connected to the transceiving module 30, and one second terminal of the fourth switching unit 510 is connected to the first antenna **Ant1,** the second antenna **Ant2,** and the third antenna **Ant3**. A first terminal of the fifth switching unit 520 is connected to another first terminal of the fourth switching unit 510, and a second terminals of the fifth switching unit 520 is connected to the antenna port **ANT** of the radio-frequency DRX device. The sixth switching unit 530 has a first terminal connected to the transceiving module 30 and a second terminal connected to another second terminal of the fourth antenna **Ant4,** the fifth antenna **Ant5,** and the fifth switching unit 520.

Specifically, the fourth switching unit 510 is a radio-frequency Three-Poles Three-Throw (3P3T) switch, the fifth switching unit 520 is a radio-frequency SPDT switch, and the sixth switching unit 530 is a radio-frequency SP4T switch. The first terminal of the fourth switching unit 510 includes three contacts. The second terminal of the fourth switching unit 510 includes three contacts. The second terminal of the fifth switching unit 520 includes two contacts. The first terminal of the sixth switching unit 530 includes two contacts. the second terminal of the sixth switching unit 530 includes four contacts. Specifically, the three contacts in the first terminal of the fourth switching unit 510 are connected to the transceiving module 30, the first terminal of the fifth switching unit 520, and the diversity receiving module 40 in one-to-one correspondence. The three contacts of the second terminal of the fourth switching unit 510 are connected to the first antenna **Ant1,** the second antenna **Ant2,** and the third antenna **Ant3** in one-to-one correspondence. The two contacts of the second terminal of the fifth switching unit 520 are connected to one of contacts of the antenna port **ANT** of the radio-frequency DRX device and the second terminal of the sixth switching unit 530 in one-to-one correspondence. Two contacts of the first terminal of the sixth switching unit 530 are connected to the transceiving module 30 and the diversity receiving module 40 in one-to-one correspondence. The other two contacts of the first terminal of the sixth switching unit 530 are connected to the fourth antenna **Ant4** and the fifth antenna **Ant5** in one-to-one correspondence.

It should be noted that in the embodiments of the present disclosure, specific types of the fourth switching unit 510, the fifth switching unit 520, and the sixth switching unit 530 included in the switching unit 50 are not further defined and can be determined as desired.

In the NSA mode, an LTE signal in the B3 frequency band (abbreviated as B3) and an NR signal in the N41 frequency band (abbreviated as N41) are "dual-connection" scenarios, i.e., B3 and N41 simultaneous operation, which may both perform traffic transmission and other services. Since B3 is a Frequency Division Duplexing system, i.e., transceiving different radio-frequency points for communication. When B3 is in a transmitting state, the primary receiving PRX and diversity receiving DRX operate simultaneously.

In the NSA mode, B3 and N41 are used as ENDC combinations, and B3 is an anchor point in the NSA mode. Signaling calls to N41 can be made only when B3 can make online signaling calls. In the embodiments of the present disclosure, the first antenna **Ant1,** the second antenna **Ant2,** and the third antenna **Ant3** can transmit and receive the B3. Specifically, the first antenna **Ant1** is used for primary receiving of B3, and the second antenna **Ant2** and the third antenna **Ant3** are used for diversity receiving of B3. When the B3 operates, the first antenna **Ant1** is in a normally open state, and one of the second antenna **Ant2** and the third antenna **Ant3**operates normally.

The radio-frequency system is in the NSA mode can also support the 1T4R SRS function of N41. As an example, taking the fourth switching unit 510 as the radio-frequency 3P3T switch, the fifth switching unit 520 as the radio-frequency SPDT switch, the sixth switching unit 530 as the radio-frequency SP4T switch, and the ENDC combinations of B3 and N41 in the NSA mode, an SRS working principle of the N41 frequency band in the NSA mode is briefly described below.

The radio-frequency signal in the N41 frequency band may be outputted from an X1 HB2 port of the radio-frequency transceiver to the transceiving module 30 (that may be configured to control transceiving of N41). After amplification and filtering processing performed by the transceiving module 30, the N41 radio-frequency signal is outputted to the radio-frequency SP4T switch, is switched to a Path 1 via the radio-frequency SP4T switch to support the SRS function through the fourth antenna **Ant4,** then is switched to a Path 2 via the radio-frequency SP4T switch to support the SRS function through the fifth antenna **Ant5,** and then is switched to a Path 3 via the radio-frequency SP4T switch and is switched to a Path 4 via the radio-frequency SPDT switch to be outputted to the SP3T switch. Then, the radio-frequency signal in the N41 frequency band is switched to a Path 5 by the radio-frequency 3P3T switch to support the SRS function through the second antenna **Ant2**. At this time, the diversity receiving of B3 is switched to the third antenna **Ant3** through the radio-frequency 3P3T switch and realized by the third antenna **Ant3**. Then, the radio-frequency 3P3T switch is switched to a Path 6 and supports the SRS function through the third antenna **Ant3**. At this time, the diversity receiving of B3 is switched to the second antenna **Ant2** through the radio-frequency 3P3T switch, and is implemented by the second antenna **Ant2**. An **SRS** path in the NSA mode is illustrated in Table 3.

**[Table 3] SRS detailed path configuration table**

| | N41 NSA |
|---|---|
| Channel 0 | Path 1 |
| Channel 1 | Path 2 |
| Channel 2 | Path 3->Path 4->Path 5 |
| Channel 3 | Path 3->Path 4->Path 6 |

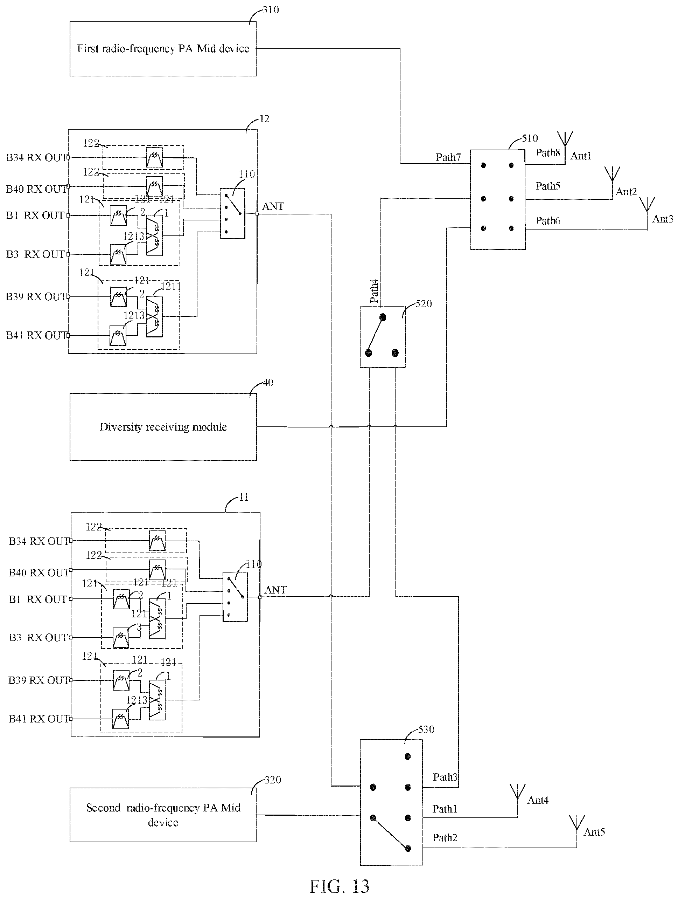

As illustrated in FIG. 13, in an embodiment, the transceiving module 30 includes a first radio-frequency PA Mid device 310 and a second radio-frequency PA Mid device 320. The first radio-frequency PAMid device 310 is connected to the first terminal of the fourth switching unit 510 and configured to support the transceiving of the first radio-frequency signal and the second radio-frequency signal. The second radio-frequency PA Mid device 320 is connected to the first terminal of the sixth switching unit 530 and configured to support the transceiving of the second radio-frequency signal. When the radio-frequency system is in the SA mode, any two of the second antenna **Ant2,** the third antenna **Ant3,** the fourth antenna **Ant4,** and the fifth antenna **Ant5** are capable of transmitting the second radio-frequency signal to support a 2T4R SRS function. The SRS working principle in the NSA mode is similar to that of the SA mode, and details are not described again. The SRS path in the NSA mode is illustrated in Table 4.

**[Table 4] SRS detailed path configuration table**

| | N41 SA |
|---|---|
| Channel 0 | Path 1 |
| Channel 1 | Path 2 |
| Channel 2 | Path 7->Path 5 |
| Channel 3 | Path 7->Path 6 |

In Table 3 and Table 4, Channel 10, Channel 11, Channel 12, and Channel 13 are transmitting paths for polling transmission of the antennas.

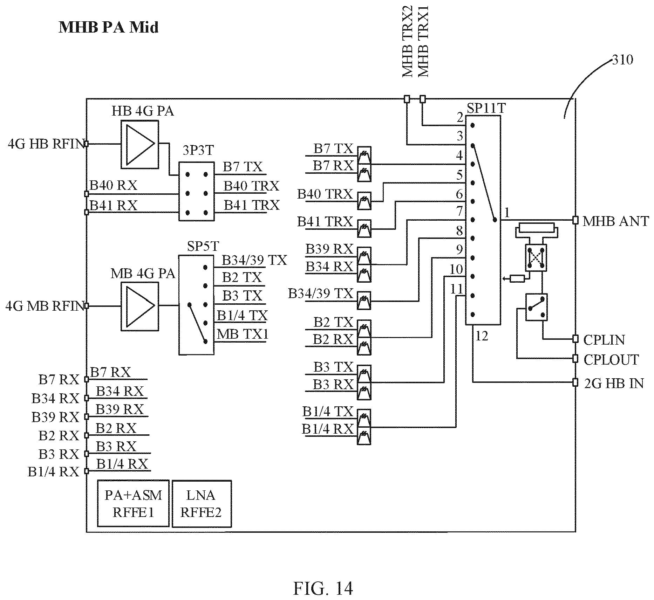

As illustrated in FIG. 14, in an embodiment, the first radio-frequency PA Mid device 310 can be understood as an MHB PA Mid device. The first radio-frequency PA Mid device 310 includes a plurality of transceiving circuits for performing transceiving control of the first radio-frequency signals in different frequency bands and the second radio-frequency signals in different frequency bands. For example, each transceiving circuit may include devices such as a power amplifier, a filter, and a multi-path selection switch, for implementing a switching control of receiving and transmitting the first radio-frequency signals in different frequency bands and the second radio-frequency signals in different frequency bands. For example, the first radio-frequency PA Mid device 310 may be used for a switching control of receiving and transmission of radio-frequency signals in the N41, B40, B7, B34, B39, B2, B3, B1, and B4 frequency bands.

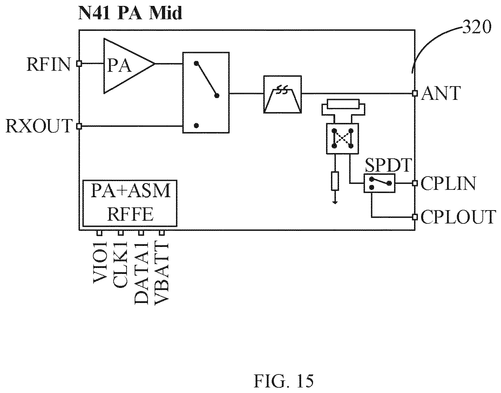

As illustrated in FIG. 15, in an embodiment, the second radio-frequency PA Mid device 320 can be understood as an N41 PA Mid device. The N41 PA Mid device may include a power amplifier supporting N41, a radio-frequency switch, a filter, a coupler, etc., which may constitute a corresponding receiving path and transmission path to implement receiving and a transmitting control of N41.

Referring to FIG. 13, in an embodiment, two radio-frequency DRX devices are provided, which are recorded as a first radio-frequency DRX device 11 and a second radio-frequency DRX device 12, respectively. The first radio-frequency DRX device 11 is configured to support the diversity receiving of the first radio-frequency signal and the second radio-frequency signal. An antenna port **ANT** of the first radio-frequency DRX device 11 is correspondingly connected to the first antenna **Ant1,** the second antenna **Ant2,** and the third antenna **Ant3** through the fourth switching unit 510 to form a receiving path of the respective antennas. The second radio-frequency DRX device 12 is configured to support the primary receiving of the first radio-frequency signal and the second radio-frequency signal. An antenna port **ANT** of the first radio-frequency DRX device 11 is connected to the fourth antenna **Ant4** and the fifth antenna **Ant5** through the sixth switching unit 530 to form a receiving path of the respective antennas.

The radio-frequency system in the embodiments includes the first radio-frequency PA Mid device 310, the diversity receiving module 40, the first radio-frequency DRX device 11, the second radio-frequency DRX device 12, the switching module 50, and the antenna assembly 20, and the radio-frequency system can be configured to support the 1T4R SRS function in the NSA mode and the 2T4R SRS function in the SA mode. Meanwhile, the radio-frequency system can also implement the MIMO function of the 4G LTE and the MIMO function of the 5G NR N41 frequency band.

Based on the radio-frequency system illustrated in FIG. 13, taking the radio-frequency in the B41 frequency band as an example, a working principle of the radio-frequency system is analyzed below.

Transmitting control: the radio-frequency in the B41 frequency band is outputted from a TX 3/4G HB port of the radio-frequency transceiver to the 4G HB RFIN port of the first radio-frequency PA Mid device 310, and is switched to a transmission channel of the radio-frequency in the B41 frequency band after amplification and filtering processing performed by the first radio-frequency PA Mid device 310; then, the radio-frequency in the B41 frequency band is outputted through the MHB port of the first radio-frequency PA Mid device 310 to the radio-frequency 3P3T switch via a Path 7; and the radio-frequency 3P3T switch is switched to a Path 8, and the first antenna **Ant1** radiates the radio-frequency in the B41 frequency band to the outside.

Primary receiving control: the radio-frequency in the B41 frequency band is received by the first antenna **Ant1** and transmitted to the radio-frequency 3P3T switch via the Path 8; the radio-frequency in the B41 frequency band is switched to the Path 7 via the radio-frequency 3P3T switch, and transmitted from the Path 7 to the MHB port of the first radio-frequency PA Mid device 310; the radio-frequency in the B41 frequency band enters the receiving channel of the B41 of the first radio-frequency PA Mid device 310, and it is then outputted to the low noise amplifier module via the B41 RX port of the first radio-frequency PAMid device 310.

Diversity receiving control: a B41 DRX MIMO signal enters through the second antenna **Ant2** and is transmitted to the radio-frequency 3P3T switch through the Path 5; the radio-frequency 3P3T switch is switched to an N41 DRX MIMO channel, the signal is transmitted to the radio-frequency SPDT switch through the Path 4; the radio-frequency SPDT switch is switched to the antenna port **ANT** of the second radio-frequency DRX device 12, and the signal is switched to the receiving channel where the B41 is located via the first switching unit 110 of the second radio-frequency DRX device 12 and outputted to the low noise amplifier module through the corresponding receiving port **RX OUT.**

With the radio-frequency system provided in the embodiments of the present disclosure, by means of the packaged radio-frequency DRX device, the receiving of the first radio-frequency signal and the second radio-frequency signal can be realized without providing independent switch, filter, and combiner, thereby reducing the cost and the substrate area occupied by the respective components in the radio-frequency system. Meanwhile, the 1T4R SRS function in the NSA mode and the 2T4R SRS function in the SA mode can also be supported. In addition, the radio-frequency system can also implement the MIMO function of the 4G LTE and the MIMO function of the 5G NR N41 frequency band, thereby improving the integration level of the radio-frequency system and reducing the complexity of PCB layout and wirings of the radio-frequency system.

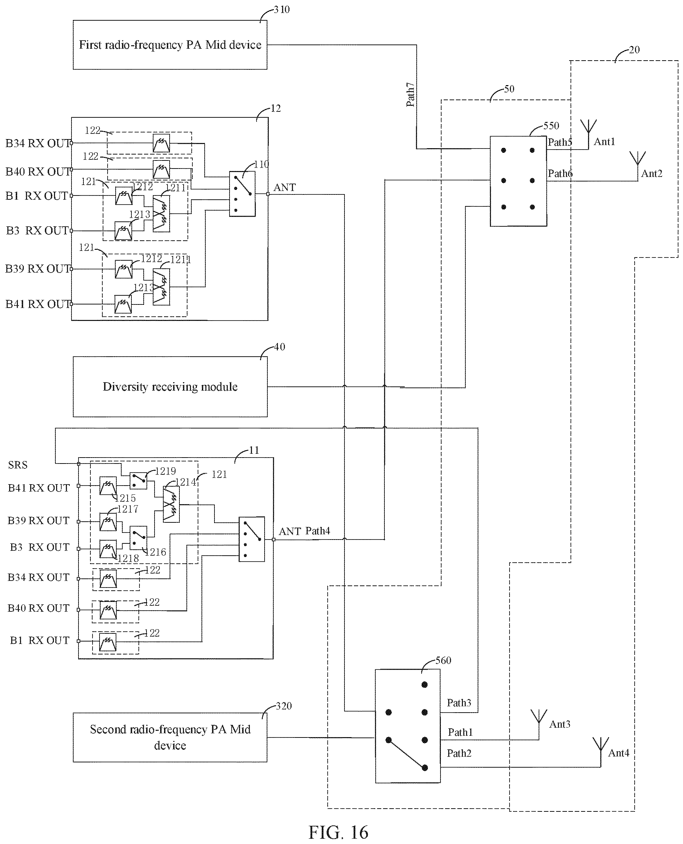

As illustrated in FIG. 16, an embodiments of the present disclosure further provides a radio-frequency system. In an embodiment, the radio-frequency system includes: the radio-frequency DRX device 10 (as illustrated in FIG. 5) in the above embodiments, an antenna assembly 20, a transceiving module 30, a diversity receiving module 40, and a switching module 50. The transceiving module 30 and the diversity receiving module 40 in the present embodiment correspond to the transceiving module 30 and the diversity receiving module 40 in the radio-frequency system illustrated in FIG. 10, respectively, and details thereof are not repeated herein.

The antenna assembly 20 includes a first antenna **Ant1,** a second antenna **Ant2,** a third antenna **Ant3,** and a fourth antenna **Ant4.** The first antenna **Ant1** and the second antenna **Ant2** are both configured to transceive a first radio-frequency signal and a second radio-frequency signal. The third antenna **Ant3** and the fourth antenna **Ant4** are both configured to transceive the second radio-frequency signal. In an embodiment, the first radio-frequency signal is an LTE signal in the medium-high frequency band, and the first radio-frequency signal is the 5G signal. That is, both the first antenna **Ant1** and the second antenna **Ant2** are antennas that can support the LTE signals in different operating frequency bands. The first antenna **Ant1,** the second antenna **Ant2,** the third antenna **Ant3,** and the fourth antenna **Ant4** can all antennas that can support the 5G NR signal. For example, the functions of the respective antennas in the antenna assembly 20 are illustrated in Table 5.

**[Table 5] Functions of respective antennas in the antenna assembly 20**

| Antenna | Function 1 | Function 2 | Function 3 |
|---|---|---|---|
| First antenna | MHB PRX/DRX | NSA: N41 DRX | SA: N41 DRX |
| Second antenna | MHB PRX/DRX | NSA: N41 DRX MIMO | SA: N41 DRX |
| Third antenna | | NSA: N41 PRX | SA: N41 DRX |
| Fourth antenna | | NSA: N41 PRX MIMO | NSA: N41 PRX MIMO |

In Table 5, MHB represents LTE signals in high frequency bands, for example, including the LTE signals in B1, B3, B34, B39, B7, B40, and B41 frequency bands; PRX represents primary receiving; and DRX represents diversity receiving.

The switching module 50 is connected to the first antenna **Ant1,** the second antenna **Ant2,** the third antenna **Ant3,** the fourth antenna **Ant4,** the transceiving module, the diversity receiving module 40, the polling transmitting port **SRS** of the radio-frequency DRX device, and the antenna port **ANT,** respectively. Specifically, the receiving channel and the transmitting path where the first antenna **Ant1,** the second antenna **Ant2,** the third antenna **Ant3,** and the fourth antenna **Ant4** are each located may be respectively controlled to be switched on by controlling the switching state of the switching module 50.

When the radio-frequency system is in the NSA mode, one of the first antenna **Ant1** and the second antenna **Ant2** is used for the primary receiving of the first radio-frequency signal, the other one of one of the first antenna **Ant1** and the second antenna **Ant2** is used for the diversity receiving of the first radio-frequency signal, and any one of the first antenna **Ant1,** the second antenna **Ant2,** the third antenna **Ant3,** and the fourth antenna **Ant4** can transmit the second radio-frequency signal to support the 1T4R SRS function.

For example, when the radio-frequency system is in the NSA mode, in a process that the first antenna **Ant1,** the second antenna **Ant2,** the third antenna **Ant3,** and the fourth antenna **Ant4** implement the transmitting of the second radio-frequency signal to support the 1T4R SRS function, the first antenna **Ant1** transmits and performs the primary receiving of the first radio-frequency signal and the second radio-frequency signal, and the second antenna **Ant2** transmits the first radio-frequency signal and performs diversity receiving on the first radio-frequency signal. Alternatively, when the radio-frequency system is in the NSA mode, in a process that the first antenna **Ant2,** the second antenna **Ant2,** the third antenna **Ant3,** and the fourth antenna **Ant4** implement transmitting of the second radio-frequency signal to support the 1T4R SRS function, the first antenna **Ant1** transmits the first radio-frequency signal and performs diversity receiving on the first radio-frequency signal, and the second antenna **Ant2** transmits and performs primary receiving of the first radio-frequency signal and the second radio-frequency signal. Based on the radio-frequency system, the first antenna **Ant1,** the second antenna **Ant2,** the third antenna **Ant3,** and the fourth antenna **Ant4** can also implement the first radio-frequency signal and the MIMO function of the first radio-frequency signal.

When the radio-frequency system is in the SA mode, any two of the first antenna **Ant1,** the second antenna **Ant2,** the third antenna **Ant3,** and the fourth antenna **Ant4** can simultaneously transmit the second radio-frequency signal to support the 2T4R SRS function. Meanwhile, based on the radio-frequency system, the first antenna **Ant1,** the second antenna **Ant2,** the third antenna **Ant3,** and the fourth antenna **Ant4** can also implement the first radio-frequency signal and the MIMO function of the first radio-frequency signal.

For the radio-frequency system according to the above embodiments, by providing the antenna assembly 20 including four antennas, the transceiving module 30, the diversity receiving module 40, the radio-frequency DRX device, and the switching module 50, the number of the antennas in the radio-frequency system is reduced when compared with the radio-frequency system according to the above embodiments, and the receiving channel and the transmitting path where the first antenna **Ant1,** the second antenna **Ant2,** the third antenna **Ant3,** and the fourth antenna **Ant4** are each located can be respectively controlled to be switched on by controlling the switching state of the switching module 50, enabling the radio-frequency system to support the 1T4R SRS function in the NSA mode and the 2T4R SRS function in the SA mode. Meanwhile, the radio-frequency system can also implement the first radio-frequency signal and the MIMO function of the first radio-frequency signal. In addition, in the radio-frequency system provided in the embodiments of the present disclosure, by means of the packaged radio-frequency DRX device, the receiving of the first radio-frequency signal and the second radio-frequency signal can be realized without requiring to provide the independent switch, filter, and combiner, thereby reducing the cost and the substrate area occupied by the respective components in the radio-frequency system. Further, compared with the radio-frequency system according to the above embodiments, the number of the antennas in the radio-frequency system is reduced, and thus layouts such as antenna pedestals and wirings can be correspondingly reduced, thereby reducing the cost and the substrate area occupied by the respective components in the radio-frequency system.

In an embodiment, the switching module 50 includes a first radio-frequency switch 550 and a second radio-frequency switch 560. The first radio-frequency switch 550 has a first terminal connected to the transceiving module 30, the diversity receiving module 40, and the radio-frequency DRX device, and a second terminal connected to the first antenna **Ant1** and the second antenna **Ant2**. The second radio-frequency switch 560 has a first terminal connected to the transceiving module 30, and a second terminal connected to the third antenna **Ant3,** the fourth antenna **Ant4**, and the polling transmitting port **SRS** of the radio-frequency DRX device, respectively.

In an embodiment, the transceiving module 30 includes a first radio-frequency PA Mid device 310 and a second radio-frequency PA Mid device 320. The first radio-frequency PA Mid device 310 is connected to the first terminal of the first radio-frequency switch 550 and configured to support the transceiving of the first radio-frequency signal and the second radio-frequency signal. The second radio-frequency PA Mid device 320 is connected to the first terminal of the second radio-frequency switch 560 and configured to support the transceiving of the second radio-frequency signal.

It should be noted that the first radio-frequency PA Mid device 310 and the second radio-frequency PA Mid device 320 in the embodiments are the same as the first radio-frequency PA Mid device 310 and the second radio-frequency PA Mid device 320 according to the above embodiments in one-to-one correspondence, and details thereof are not repeated herein.

In an embodiment, two radio-frequency DRX devices are provided, which are recorded as a first radio-frequency DRX device 11 and a second radio-frequency DRX device 12, respectively. The first radio-frequency DRX device 11 is configured to support the diversity receiving of the first radio-frequency signal and the second radio-frequency signal. An antenna port **ANT** of the first radio-frequency DRX device 11 is correspondingly connected to the first antenna **Ant1** and the second antenna **Ant2** through the first radio-frequency switch 550 to form a receiving path of the respective antennas. Meanwhile, the polling transmitting port **SRS** of the first radio-frequency DRX device 11 is connected to the second radio-frequency switch 560. The second radio-frequency DRX device 12 is configured to support primary receiving of the first radio-frequency signal and the second radio-frequency signal. The antenna port **ANT** of the second radio-frequency DRX device 12 is connected to the third antenna **Ant3** and the fourth antenna **Ant4** through the second radio-frequency switch 560 to form a receiving path of the respective antennas.

It should be noted that the second radio-frequency DRX device 12 in the present embodiment of the present disclosure has the same structure as the radio-frequency DRX device in the radio-frequency system according to the above embodiments.

Specifically, the first radio-frequency switch 550 is a radio-frequency 3P3T switch, the second radio-frequency switch 560 is a radio-frequency SP4T switch. A first terminal of the first radio-frequency switch 550 includes three contacts. A second terminal of the fourth switching unit 510 includes three contacts. A first terminal of the second radio-frequency switch 560 includes two contacts. A second terminal of the second radio-frequency switch 560 includes four contacts. The three contacts in the first terminal of the first radio-frequency switch 550 are connected to the first radio-frequency PA Mid device 310, the antenna port **ANT** of the first radio-frequency DRX device 11, and the diversity receiving module 40 in one-to-one correspondence. The two contacts of the second terminal of the first radio-frequency switch 550 are connected to the first antenna **Ant1** and the second antenna **Ant2** in one-to-one correspondence. The two contacts of the first terminal of the second radio-frequency switch 560 are connected to the antenna port **ANT** of the second radio-frequency DRX device 12 and the second radio-frequency PA Mid device 320 in one-to-one correspondence. Three contacts of the second terminal of the second radio-frequency switch 560 are connected to the third antenna **Ant3,** the fourth antenna **Ant4,** and the polling transmitting port **SRS** of the first radio-frequency DRX device 11 in one-to-one correspondence.

It should be noted that in the embodiments of the present disclosure, specific types of the first radio-frequency switch 550 and the second radio-frequency switch 560 included in the switching module 50 are not further defined and can be determined as desired.

When the radio-frequency system is in the NSA mode, the 1T4R SRS function of N 41 may also be supported. For example, taking the first radio-frequency switch 550 as the radio-frequency 3P3T switch, the second radio-frequency switch 560 as the radio-frequency SP4T switch, and the ENDC combinations of the B3 and N41 in the NSA mode, for example, the SRS working principle of the N41 in the NSA mode is briefly described below.

The radio-frequency signal in the N41 frequency band can be outputted from the X1 HB2 port of the radio-frequency transceiver to the second radio-frequency PAMid device 320. After amplification and filtering processing performed by the second radio-frequency PA Mid device 320, the N41 radio-frequency signal is outputted to the radio-frequency SP4T switch, is switched to the Path 1 via the radio-frequency SP4T switch to support the SRS function through the third antenna **Ant3,** then is switched to the Path 2 via the radio-frequency SP4T switch to support the SRS function through the fourth antenna **Ant4,** then is switched to the Path 3 via the radio-frequency SP4T switch to be outputted to the polling transmitting port **SRS** of the radio-frequency DRX device, is switched to the second combiner 1214 via the third switching unit 1219 of the radio-frequency DRX device, and is switched to the Path 4 via the first switching unit 110 to be outputted to the SP3T switch. Then, the radio-frequency signal in the N41 frequency band is switched to the Path 5 by the radio-frequency 3P3T switch to support the SRS function through the first antenna **Ant1**. At this time, the primary receiving of B3 is realized by the second antenna **Ant2** and the diversity receiving of B3 is realized by the first antenna **Ant1**. That is, the diversity receiving of B3 share the first antenna **Ant1** with the transceiving of the N41. Then, the radio-frequency 3P3T switch is switched to the Path 6 and supports the SRS function through the second antenna **Ant2**. At this time, the primary receiving of B3 is realized by the first antenna **Ant1** and the diversity receiving of B3 is realized by the second antenna **Ant2**. That is, the diversity receiving of B3 share the second antenna **Ant2** with the transceiving of the N41. The SRS working principle in the NSA mode is similar to that of the SA mode, and details there are not repeated herein. The SRS path in the NSA mode is illustrated in Table 6.

**[Table 6] SRS detailed path configuration table**

| | N41 NSA | N41 SA |
|---|---|---|
| Channel 0 | Path 1 | Path 1 |
| Channel 1 | Path 2 | Path 2 |
| Channel 2 | Path 3->Path 4->Path 5 | Path 7->Path 5 |
| Channel 3 | Path 3->Path 4->Path 6 | Path 7->Path 6 |

In Table 6, Channel 10, Channel 11, Channel 12, and Channel 13 are transmitting paths for polling transmission of the antennas.

The radio-frequency system in the embodiments includes the first radio-frequency PA Mid device 310, the first radio-frequency PA Mid device 310, the diversity receiving module 40, the first radio-frequency DRX device 11, the second radio-frequency DRX device 12, the switching module 50, and the antenna assembly 20, and the radio-frequency system may be configured to support the 1T4R SRS function in the NSA mode and the 2T4R SRS function in the Standalone Access mode. Meanwhile, the radio-frequency system can also implement the MIMO function of the 4G LTE and the MIMO function of the 5G NR N41 frequency band.

Based on the radio-frequency system illustrated in FIG. 16, taking the radio-frequency in the B41 frequency band as an example, the working principle of the radio-frequency system is analyzed below.

Transmitting control: the radio-frequency in the B41 frequency band is outputted from the TX 3/4G HB port of the radio-frequency transceiver to the 4G HB RFIN port of the first radio-frequency PAMid device 310, and is switched to the transmission channel of the B41 after the amplification and filtering processing performed by the first radio-frequency PA Mid device 310; then, the radio-frequency in the B41 frequency band is outputted through the MHB port of the first radio-frequency PA Mid device 310 to the radio-frequency 3P3T switch via the Path 7; and the radio-frequency 3P3T switch is switched to the first antenna **Ant1** via the Path 5 to radiate the radio-frequency in the B41 frequency band to the outside.

Primary receiving control: the radio-frequency in the B41 frequency band is received by the first antenna **Ant1** and transmitted to the radio-frequency 3P3T switch through the Path 5; the radio-frequency in the B41 frequency band is switched to the Path 7 via the radio-frequency 3P3T switch, and transmitted from the Path 7 to the MHB port of the first radio-frequency PAMid device 310; the radio-frequency in the B41 frequency band enters the receiving channel of the B41 of the first radio-frequency PA Mid device 310, and it is then outputted to the low noise amplifier module via the B41 RX port of the first radio-frequency PA Mid device 310 to further be outputted to the radio-frequency transceiver.

Diversity receiving control: a B41 DRX MIMO signal enters through the second antenna **Ant2** and is transmitted to the radio-frequency 3P3T switch through the Path 6; the radio-frequency 3P3T switch is switched to the N41 DRX MIMO channel, the signal is transmitted to the antenna port **ANT** of the first radio-frequency DRX device 11 through the Path 4; the signal is switched to the receiving channel where the B41 is located via the first switching unit 110 of the first radio-frequency DRX device 11, the signal is outputted to the low noise amplifier module through the corresponding receiving port **RX OUT** after subjected to the filtering processed, and further outputted to the radio-frequency transceiver.

In the radio-frequency system provided in the embodiments of the present disclosure, by mean of the packaged radio-frequency DRX device, the receiving of the first radio-frequency signal and the second radio-frequency signal can be realized without requiring to provide the independent switch, filter, and combiner, thereby reducing the cost and the substrate area occupied by the respective components in the radio-frequency system. Meanwhile, the 1T4R SRS function in the NSA mode and the 2T4R SRS function in the SA mode can be supported. In addition, the radio-frequency system can also implement the MIMO function of the 4G LTE and the MIMO function of the 5G NR N41 frequency band, thereby improving the integration level of the radio-frequency system and reducing the complexity of PCB layout and wirings of the radio-frequency system.

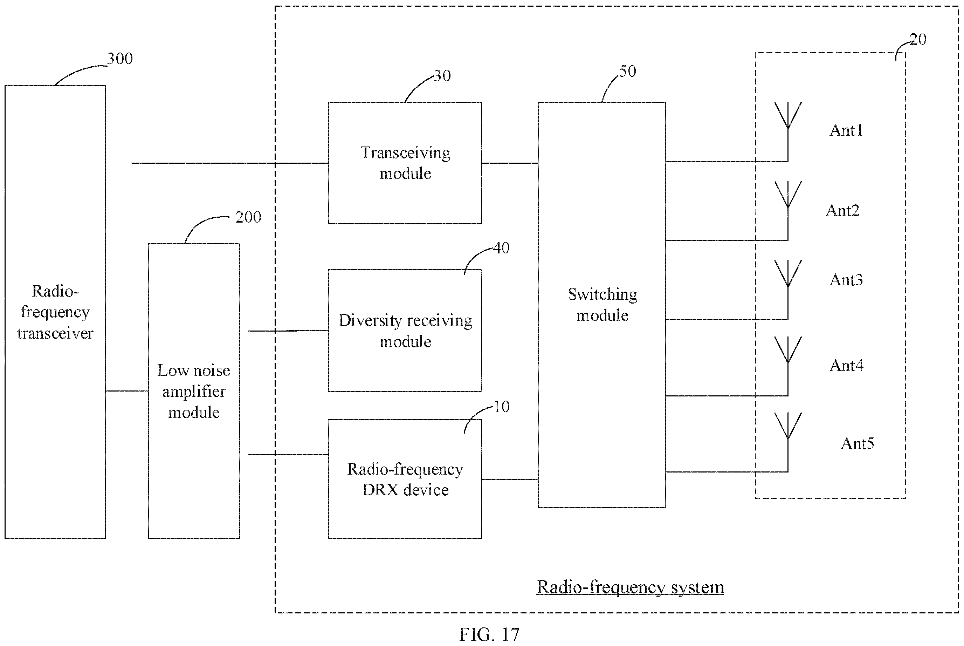

As illustrated in FIG. 17, according to an embodiment of the present disclosure, a communication apparatus is further provided. The communication apparatus includes the radio-frequency system 100 according to any of the above embodiments, a radio-frequency transceiver 300, and a low noise amplifier module 200. The radio-frequency transceiver 300 is connected to the transceiving module 30 and the low noise amplifier module 200 in the radio-frequency system. The low noise amplifier module 200 is connected to the diversity receiving module 40 of the radio-frequency system and the radio-frequency DRX device 10.

Specifically, the radio-frequency transceiver 300 may include a transmitter (e.g., transmitter TX) and a receiver (e.g., receiver RX); or the radio-frequency transceiver 300 may include only a receiver (e.g., receiver RX); or the radio-frequency transceiver 300 may include only a transmitter (e.g., transmitter TX). The radio-frequency transceiver can be configured to implement frequency conversion processing between a medium-frequency signal and a baseband signal and/or to implement frequency conversion processing between a medium-frequency signal and a high frequency signal, or the like.

By providing the radio-frequency system in the communication apparatus, the integration level of the radio-frequency system can be increased, and the substrate area occupied by respective components in the radio-frequency system can be reduced. In addition, the power supply, logic control, and PCB layout and wirings of the radio-frequency DRX device can be simplified, thereby saving the costs.

Although several embodiments of the present disclosure have been described above in a specific and detailed manner, the protection scope of the present disclosure cannot be construed as being limited to these embodiments. It should be noted that, those skilled in the art can make various variations and improvements without departing from the concept of the present disclosure, and these variations and improvements shall fall within the protection scope of present disclosure as defined by the claims as attached.

## Claims

1. A radio-frequency Diversity receiving (DRX) device, having a plurality of receiving ports configured to be connected to a low noise amplifier module and an antenna port configured to be connected to an antenna, the radio-frequency DRX device comprising:
a first switching unit having a first terminal connected to the antenna port, and a plurality of second terminals, the first switching unit being configured to selectively switch on a receiving path between the antenna port and any one of the plurality of receiving ports; and
a filtering module having a plurality of input terminals connected to the plurality of second terminals of the first switching unit in one-to-one correspondence, and a plurality of output terminals connected to the plurality of receiving ports in one-to-one correspondence, the filtering module being configured to perform filtering processing on radio-frequency signals in at least three frequency bands.

2. The radio-frequency DRX device according to claim 1, wherein the filtering module comprises:
at least one first filtering circuit configured to perform filtering processing on a plurality of radio-frequency signals in different frequency bands; and
at least one second filtering circuit configured to perform filtering processing on a radio-frequency signal in a single frequency band, wherein frequency bands of radio-frequency signals correspondingly processed by the first filtering circuit and the second filtering circuit are different.

3. The radio-frequency DRX device according to claim 2, wherein each of the at least one first filtering circuit comprises:
a first combiner having an input terminal connected to one of the plurality of second terminals of the first switching unit, a first output terminal, and a second output terminal;
a first filter connected to the first output terminal of the first combiner and one of the plurality of receiving ports, respectively; and
a second filter connected to the second output terminal of the first combiner and another one of the plurality of receiving ports, wherein the first filter and the second filter are configured to perform the filtering processing on the plurality of radio-frequency signals in the different frequency bands.

4. The radio-frequency DRX device according to claim 2, wherein at least one first filtering circuit comprises two first filtering circuits, one of the two first filtering circuits being configured to perform filtering processing on radio-frequency signals in B1 and B3 frequency bands, and another one of the two first filtering circuits being configured to perform filtering processing on radio-frequency signals in B39 and B41 frequency bands.

5. The radio-frequency DRX device according to claim 2, wherein at least one second filtering circuit comprises two second filtering circuits, the two second filtering circuits being configured to perform filtering processing on a radio-frequency signal in a B34 frequency band and a radio-frequency signal in a B40 frequency band, respectively.

6. The radio-frequency DRX device according to claim 2, wherein each of the at least one first filtering circuit comprises:
a second combiner having an input terminal connected to one of the second terminals of the first switching unit, a first output terminal, and a second output terminal;
a third filter connected to the first output terminal of the second combiner and another one of the plurality of receiving ports;
a second switching unit having a first terminal connected to the second output terminal of the second combiner, and second terminals;
a fourth filter connected to one of the second terminals of the second switching unit and yet another one of the plurality of receiving ports; and
a fifth filter connected to another one of the second terminals of the second switching unit and still yet another one of the plurality of receiving ports, wherein the third filter, the fourth filter, and the fifth filter perform the filtering processing on the plurality of radio-frequency signals in the different frequency bands, respectively.

7. The radio-frequency DRX device according to claim 6, further having a polling transmitting port configured to be connected to a radio-frequency Power Amplifier Modules comprising Duplexers (PA Mid) device, wherein the first filtering circuit further comprises:
a third switching unit connected to the polling transmitting port, the third filter, and the second combiner, the third switching unit being configured to selectively switch on a transmitting path between the polling transmitting port and the antenna port and a receiving path where the third filter is located.

8. The radio-frequency DRX device according to claim 6, wherein the at least one first filtering circuit is configured to perform filtering processing on radio-frequency signals in B3, B39, and B41 frequency bands.

9. The radio-frequency DRX device according to claim 8, wherein the at least one second filtering circuit comprises three second filtering circuits, the three second filtering circuits being configured to perform filtering processing on a radio-frequency signal in a B1 frequency band, a radio-frequency signal in a B34 frequency band, and a radio-frequency signal in a B40 frequency band, respectively.

10. A radio-frequency system, comprising:
an antenna assembly comprising a first antenna, a second antenna, a third antenna, a fourth antenna, and a fifth antenna, wherein the first antenna is configured to transceive a first radio-frequency signal, the second antenna and the third antenna are configured to transceive the first radio-frequency signal and a second radio-frequency signal, and the fourth antenna and the fifth antenna are configured to transceive the second radio-frequency signal;
a transceiving module configured to support transceiving of the first radio-frequency signal and the second radio-frequency signal;
a diversity receiving module configured to support diversity receiving of the first radio-frequency signal and the second radio-frequency signal;
the radio-frequency DRX device according to any one of claims 1 to 6, the radio-frequency DRX device being configured to support the diversity receiving of the first radio-frequency signal and the second radio-frequency signal; and
a switching module connected to the first antenna, the second antenna, the third antenna, the fourth antenna, the fifth antenna, the transceiving module, the diversity receiving module, and the radio-frequency DRX device, wherein:
when the radio-frequency system is in a Non-Standalone Access mode, at least two of the first antenna, the second antenna, and the third antenna are in an operating state to be capable of transceiving the first radio-frequency signal, and any one of the second antenna, the third antenna, the fourth antenna, and the fifth antenna is capable of transmitting the second radio-frequency signal to support a 1T4R Sounding Reference Signal (SRS) function.

11. The radio-frequency system according to claim 10, wherein the switching module comprises:
a fourth switching unit having a first terminal connected to the transceiving module, and a second terminal connected to the first antenna, the second antenna, and the third antenna;
a fifth switching unit having a first terminal connected to the first terminal of the fourth switching unit, and a second terminal connected to the antenna port of the radio-frequency DRX device; and
a sixth switching unit having a first terminal connected to the transceiving module, and a second terminal connected to the fourth antenna, the fifth antenna and the second terminal of the fifth switching unit.

12. The radio-frequency system according to claim 11, wherein the transceiving module comprises:
a first radio-frequency PA Mid device connected to the first terminal of the fourth switching unit and configured to support the transceiving of the first radio-frequency signal and the second radio-frequency signal;
a second radio-frequency PA Mid device connected to the first terminal of the sixth switching unit and configured to support the transceiving of the second radio-frequency signal, wherein:
when the radio-frequency system is in a Standalone Access mode, any two of the second antenna, the third antenna, the fourth antenna, and the fifth antenna are capable of transmitting the second radio-frequency signal to support a 2T4R SRS function.

13. The radio-frequency system according to claim 11, wherein:
two radio-frequency DRX devices are provided, the two radio-frequency DRX devices being a first radio-frequency DRX device and a second radio-frequency DRX device, respectively;
the first radio-frequency DRX device is configured to support the diversity receiving of the first radio-frequency signal and the second radio-frequency signal, an antenna port of the first radio-frequency DRX device being correspondingly connected to the first antenna, the second antenna, and the third antenna through the fourth switching unit to form a diversity receiving path of the respective antennas; and
the second radio-frequency DRX device is configured to support primary receiving of the first radio-frequency signal and the second radio-frequency signal, an antenna port of the first radio-frequency DRX device being connected to the fourth antenna and the fifth antenna through the sixth switching unit to form a primary receiving path of the respective antennas.

14. The radio-frequency system according to any one of claims 11 to 13, wherein:
the first radio-frequency signal is a Long-Term Evolution (LTE) signal in a medium-high frequency band; and
the first radio-frequency signal is a 5-th Generation (5G) signal.

15. A radio-frequency system, comprising:
an antenna assembly comprising a first antenna, a second antenna, a third antenna, and a fourth antenna, wherein the first antenna and the second antenna are both configured to transceive a first radio-frequency signal and a second radio-frequency signal, and wherein the third antenna and the fourth antenna are both configured to transceive the second radio-frequency signal;
a transceiving module configured to support transceiving of the first radio-frequency signal and the second radio-frequency signal;
a diversity receiving module configured to support diversity receiving of the first radio-frequency signal and the second radio-frequency signal;
the radio-frequency DRX device according to any one of claims 7 to 9, the radio-frequency DRX device being configured to support the diversity receiving of the first radio-frequency signal and the second radio-frequency signal; and
a switching module connected to the first antenna, the second antenna, the third antenna, the fourth antenna, the transceiving module, the diversity receiving module, the antenna port of the radio-frequency DRX device, and the polling transmitting port of the radio-frequency DRX device, wherein:
when the radio-frequency system is in a Non-Standalone Access mode, one of the first antenna and the second antenna is used for primary receiving of the first radio-frequency signal, the other one of the first antenna and the second antenna is used for the diversity receiving of the first radio-frequency signal, and any one of the first antenna, the second antenna, the third antenna, and the fourth antenna is capable of transmitting the second radio-frequency signal to support a 1T4R SRS function.

16. The radio-frequency system according to claim 15, wherein the switching module comprises:
a first radio-frequency switch having first terminals respectively connected to the transceiving module, the diversity receiving module, and the radio-frequency DRX device, and second terminals connected to the first antenna and the second antenna, respectively; and
a second radio-frequency switch having a first terminal connected to the transceiving module, and a second terminal connected to the third antenna, the fourth antenna, and the polling transmitting port of the radio-frequency DRX device.

17. The radio-frequency system according to claim 16, wherein the transceiving module comprises:
a first radio-frequency PA Mid device connected to one of the first terminals of the first radio-frequency switch and configured to support the transceiving of the first radio-frequency signal and the second radio-frequency signal; and
a second radio-frequency PA Mid device connected to another one of the first terminals of the second radio-frequency switch and configured to support the transceiving of the second radio-frequency signal, wherein:
when the radio-frequency system is in a Standalone Access mode, any two of the first antenna, the second antenna, the third antenna, and the fourth antenna are capable of transmitting the second radio-frequency signal to support a 2T4R SRS function.

18. The radio-frequency system according to claim 16, wherein:
two radio-frequency DRX devices are provided, the two radio-frequency DRX devices being a first radio-frequency DRX device and a second radio-frequency DRX device, respectively;
the first radio-frequency DRX device is configured to support the diversity receiving of the first radio-frequency signal and the second radio-frequency signal, an antenna port of the first radio-frequency DRX device being correspondingly connected to the first antenna and the second antenna through the first radio-frequency switch to form a diversity receiving path of the respective antennas; and
the second radio-frequency DRX device is configured to support primary receiving of the first radio-frequency signal and the second radio-frequency signal, an antenna port of the first radio-frequency DRX device being connected to the third antenna and the fourth antenna through the second radio-frequency switch to form a primary receiving path of the respective antennas.

19. The radio-frequency system according to any one of claims 16 to 18, wherein:
the first radio-frequency signal is an LTE signal in a medium-high frequency band; and
the first radio-frequency signal is a 5G signal.

20. A communication apparatus, comprising:
a radio-frequency transceiver;
a low noise amplifier module; and
the radio-frequency system according to any one of claims 10 to 14 or the radio-frequency system according to any one of claims 15 to 19, the radio-frequency system being connected to the radio-frequency transceiver.
